# EUROPEAN PATENT SPECIFICATION

(11) **EP 2 419 989 B1**
(45) Date of publication and mention of the grant of the patent: **30.03.2016**
(21) Application number: 10780055.9
(22) Date of filing: 24.05.2010
(51) Int. Cl.: H02J 7/02, B60L 11/18

(54) **IN-VEHICLE CHARGER**
LADEVORRICHTUNG AN BORD EINES FAHRZEUGES
CHARGEUR EMBARQUÉ POUR VÉHICULE

(30) Priority: 27.05.2009 CN 200920132425 U
(43) Date of publication of application: 22.02.2012
(73) Proprietor: BYD Company Limited, Shenzhen, Guangdong 518118 (CN)
(72) Inventor: GUO, Bin, Shenzhen Guangdong 518118 (CN); ZHANG, Jianhua, Shenzhen Guangdong 518118 (CN); LUO, Hongbin, Shenzhen Guangdong 518118 (CN)
(74) Representative: Hoffmann Eitle
(86) International application number: PCT/CN2010/073116
(87) International publication number: WO 2010/135974

(56) References cited:
- CN-U- 201 438 644
- CN-Y- 2 834 005
- JP-A- H 099 417
- JP-A- 9 009 417
- JP-A- 2006 136 119
- US-A1- 2008 316 774
- US-A1- 2009 103 341
- US-B1- 6 204 630

## Description

The present application claims priority of and benefits of Chinese Patent Application No. 200920132425.2 filed with SIPO of P. R. China on May 27, 2009.

### BACKGROUND

### Field of the invention

The present invention generally relates to an in-vehicle charger, more particularly, to an in-vehicle charger of an electric vehicle or a hybrid electric vehicle.

### Description of related art

The power battery of an electric vehicle or a hybrid electric vehicle comprises two parts: a starting battery and a traction battery. The starting battery is used for the start-up of the engine or motor of the vehicle, or supplying power to the vehicle body electric system before the start-up of the vehicle. The traction battery is used for supplying power to the motor after the start-up of the vehicle so as to drive the motor to rotate the vehicle wheels.

The conventional in-vehicle charger of the electric vehicle or the hybrid electric vehicle only charges the traction battery. When the electric vehicle or the hybrid electric vehicle has been not started for a long time, due to the static power of the vehicle body electric system, the starting battery may feed power. Meanwhile the electric energy of the traction battery may be converted and inputted into the starting battery via DC/DC converter, but the traction battery may still feed power because of self-electricity consumption or the static power of the electrical apparatus connected with the traction battery. The starting battery and traction battery are simultaneously in feedback electricity state. It is needed for charging not only the traction battery but also the starting battery. Due to the vehicle body electric system of low voltage such as the battery manager needs of power supply in the charging process, and due to the feeding of the traction battery, the electric energy of the traction battery may not be converted and inputted into the starting battery via DC/DC converter. Thus, the conventional in-vehicle charger may not charge the traction battery when the starting battery and traction battery are simultaneously in feedback electricity state.

The following documents disclose technological background art for the present invention:
D1 US 2008/316774 A1 (ITO HIROO [JP] ET AL) 25 December 2008 (2008-12-25)
D2 JP H09 9417 A (TOYODA AUTOMATIC LOOM WORKS) 10 January 1997 (1997-01-10)
D3 US 2009/103341 A1 (LEE YOUNG JOO [US] ET AL) 23 April 2009 (2009-04-23)

Documents D1 and D3 disclose charging circuits respectively for 2 batteries. The charging circuits 42 batteries are also controlled by a central control unit. These documents also disclose rectifying circuits. Document D2 discloses that charging circuits can include boost/buck circuits and that the heat sink can be used in connection with the rectification and stabilisation circuit.

### SUMMARY OF THE INVENTION

The present invention is directed to solve at least one problem in the prior art.

Accordingly, an embodiment of the present invention provides an in-vehicle charger which may charge the traction battery when the starting battery and traction battery are simultaneously in feedback electricity state.

The in-vehicle charger according to the embodiment of the present invention comprises a rectification and voltage-stabilizing circuit which inputs, rectifies and stabilizes a commercial power; a traction battery charging circuit which is electrically connected with the rectification and voltage-stabilizing circuit and charges a traction battery; a control communication circuit which is electrically connected with the rectification and voltage-stabilizing circuit and controls the traction battery charging circuit; and a starting battery charging circuit which is electrically connected with the rectification and voltage-stabilizing circuit and starts charging of a starting battery under the control of the control communication circuit.

With the in-vehicle charger according to the embodiment of the present invention, the starting battery charging circuit is provided in the in-vehicle charger. When the starting battery and traction battery are simultaneously in feedback electricity state, the starting battery charging circuit may be controlled by the control communication circuit to charge the starting battery; then when the voltage of the starting battery is up to a threshold, a battery manager may start so as to charge the traction battery by the traction battery charging circuit, thus finishing the charging of the power battery comprising the starting battery and the traction battery. Meanwhile, the starting battery charging circuit of the in-vehicle charger may continually charge the starting battery without the DC/DC converter. So that the charging efficiency is improved and the number of the electrical apparatuses participating in the charging process is reduced.

### BRIEF DESCRIPTION OF THE DRAWINGS

Fig. 1 is a schematic view of the conventional in-vehicle in operation state.
Fig. 2 is a structure view of the conventional in-vehicle in Fig. 1.
Fig. 3 is a schematic view showing circuits of the conventional in-vehicle.
Fig. 4 is a structure view of the in-vehicle according to an embodiment of the present invention.
Fig. 5 is a schematic view of circuits of the in-vehicle according to an embodiment of the present invention.

### DETAILED DESCRIPTION OF EMBODIMENTS OF THE INVENTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

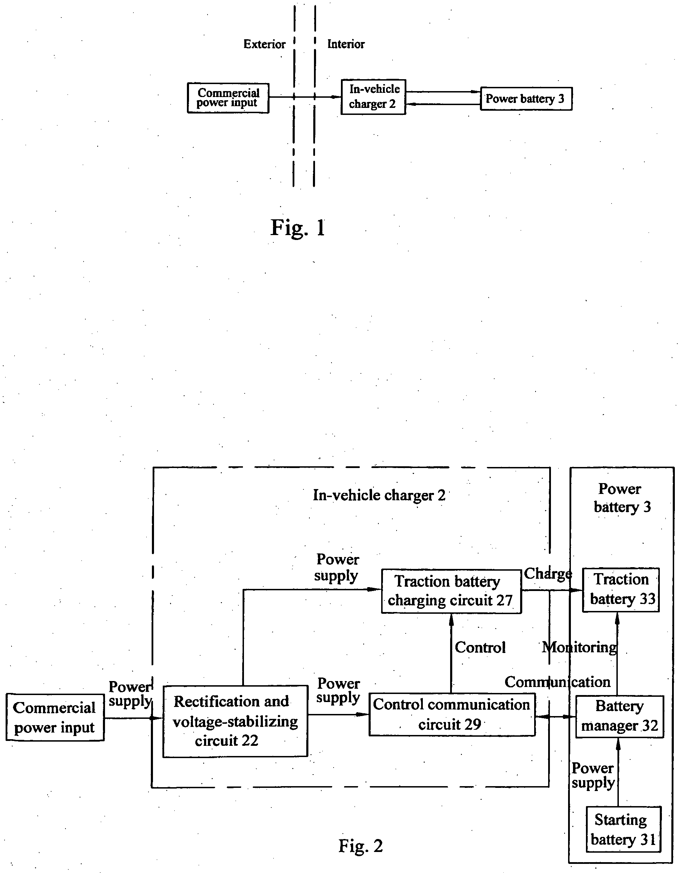

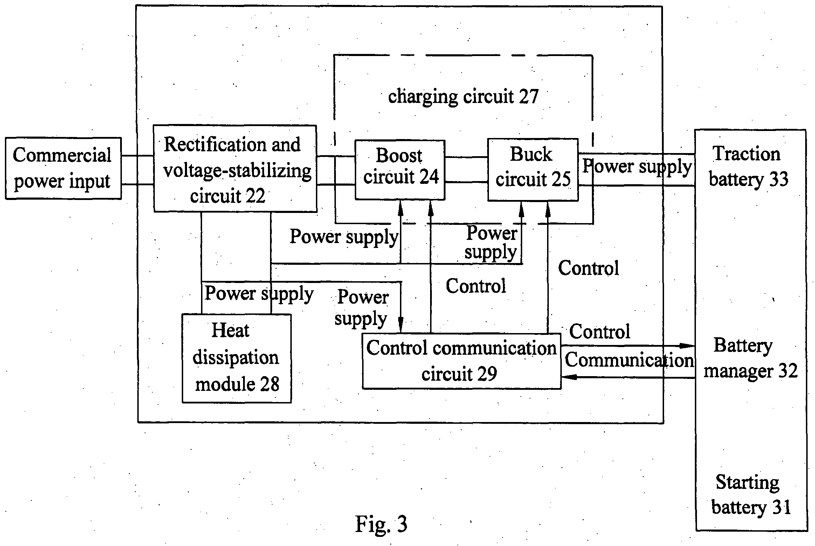

As shown in Fig.1, the conventional in-vehicle charger 2 is used to connect a power supply (not shown) and a power battery 3 of the electric vehicle (EV) or the hybrid electric vehicle (HEV), so as to charge the power battery 3. As shown in Fig. 2 and Fig. 3, the conventional in-vehicle charger 2 generally comprises a rectification and voltage-stabilizing circuit 22, a traction battery charging circuit 27 and a control communication circuit 29. An AC signal of an inputted commercial power is converted into a DC signal by the rectification and voltage-stabilizing circuit 22 while being rectified, filtered and voltage-stabilized. Meanwhile a signal power with a stable voltage is provided by the rectification and voltage-stabilizing circuit 22 to the traction battery charging circuit 27 and the control communication circuit 29. The rectification and voltage-stabilizing circuit 22 is selected the conventional power factor correction circuit that may be an active circuit or a passive circuit.

As shown in Fig. 3, the traction circuit 27 comprises a boost circuit 24 and a buck circuit 25. The signal power provided by the rectification and voltage-stabilizing circuit 22 is converted into a high voltage DC by the boost circuit 24, so as to provide a constant voltage source for the buck circuit 25. For example, the boost circuit 24 may be the BOOST circuit controlled by the control chips such as IR1150 and UC3854, the main circuit thereof comprises an inductance coil, a switch transistor, a diode and an output capacitance. Feedback of the voltage and current to the control chips realizes the boosting of the boost circuit 24.

The buck circuit 25 is a pulse width modulation buck circuit 25 that adjusts the high voltage DC outputted by the boost circuit 24 to a suitable voltage and current for charging the traction battery 33. Thereby the constant voltage and current for charging the traction battery 33 may be realized and the safety in charging may be ensured. For example, the pulse width modulation buck circuit 25 may be a non-isolated BUCK circuit controlled by the pulse width modulation control chips such as UC3842. The main circuit thereof comprises an inductance coil, a switch transistor, a diode and an output capacitance. Feedback of the voltage and current to the control chips realizes the bucking of the pulse width modulation buck circuit 25. The primary side of the main circuit comprises four switch transistors and driving circuits, the middle of the main circuit comprises an isolation transformer, the secondary side of the main circuit comprises a full-wave rectifier and a filter circuit, which generally consists of the diodes, the inductance coils and the output capacitances.

The control communication circuit 29 protects the software and realizes the communication among the parts of the EV or HEV. The control communication circuit 29 may control the whole power supply for charging, that is, which may realize the start-up and termination of the charging, or may control ON/OFF of the boost circuit 24 and the pulse width modulation buck circuit 25; or may communicate with other modules (mainly, the battery manager 32), for example which is used for the CNC bus network in vehicles; or may receive the state information from the power battery such as the traction battery 33, and judge whether charging the batteries or not according to the state information. The control communication circuit 29 may be the single-chip microcomputer with the communicating function.

As shown in Fig. 3, when the power battery 3 of the conventional EV or HEV feeds power, that is, when the starting battery 31 and the traction battery 33 feed power at different time, the in-vehicle charger 2 may charge the traction battery 33 via the inputted commercial power. The rectification and voltage-stabilizing circuit 22 may rectify and stabilize the commercial power to form a stable power signal which may be transferred to the control communication circuit 29 and the traction battery charging circuit 27. The traction battery charging circuit 27 may charge the traction battery under the control of the control communication circuit 29. In charging the traction battery, the control communication circuit 29 may keep communicating with the battery manager 32, and the battery manager 32 may keep real-time feedback the signal about the traction battery charging circuit 27 charging for the traction battery to the control communication circuit 29. That is, when the traction battery 33 reaches a saturation voltage, the signal may be fed to the control communication circuit 29 by the battery manager 32, and the operation of the traction battery charging circuit 27 may be stopped via the control communication 29, therefore charging of the traction battery 33 of the power battery 3 is finished. The control and the parameter detection related to the charging process for the traction battery 33 are well known by those skilled in the art and detailed descriptions thereof are omitted here.

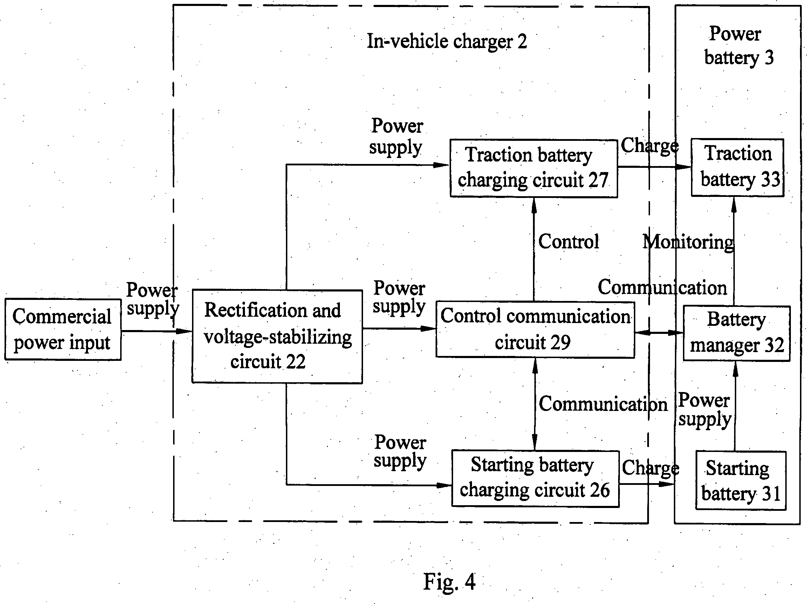

As shown in Fig. 4, the in-vehicle charger 2 according to an embodiment of the present invention is shown. The relay in the linking line is not related to the substantiality of the present invention and thereby detailed descriptions thereof is omitted here. The in-vehicle charger 2 according to embodiments of the present invention comprises not only the original rectification and voltage-stabilizing circuit 22, the traction battery charging circuit 27 and the control communication circuit 29 but also the starting battery charging circuit 26. The starting battery charging circuit 26 is electrically connected with the rectification and voltage-stabilizing circuit 22. The starting battery charging circuit 26 may charge the starting battery 31 under the control of the control communication circuit 29. The starting battery charging circuit 26 may be one of the flyback topolopy circuit, the forward circuit or the half-bridge topolopy circuit. Because the voltage of the traction battery 33 of the EV or HEV is much greater than that of the starting battery 31, the power of the starting battery charging circuit 26 is much less than that of the traction battery charging circuit 27. The power of the starting battery charging circuit 26 should be selected with considering the total consumption of power consumed by the vehicle body electric system (such as the relay in the starting battery charging circuit 26, the battery manager 32 and the combined instruments) in continuous operation state during the charging of the starting battery 31. If the total consumption of power is 36V, the output power of the starting battery charging circuit 26 should be higher than 36V, in order to prevent the voltage of the starting battery 31 from decreasing in the charging process.

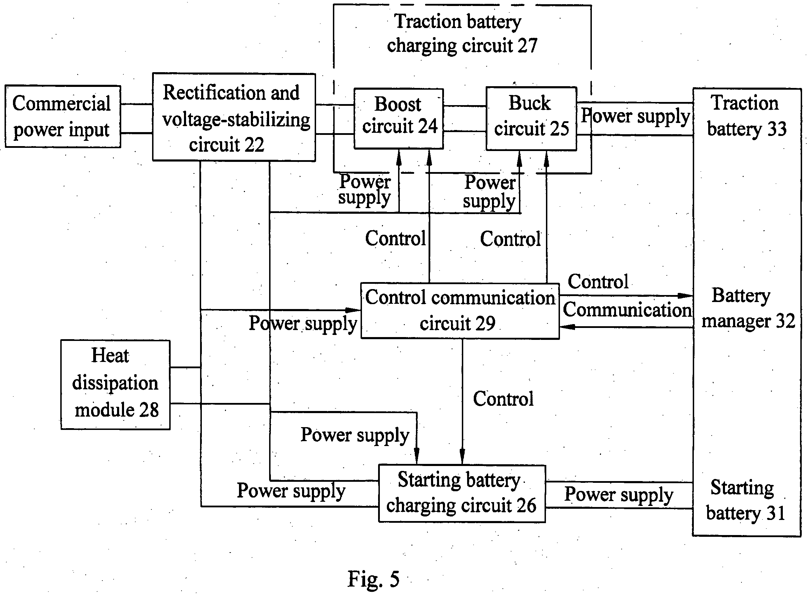

As shown in Fig.5, the rectification and voltage-stabilizing circuit 22 may rectify and stabilize the commercial power to form a current signal with stable voltage so as to provide to the starting battery charging circuit 26. The control site of the starting battery charging circuit 26 is electrically connected with the control communication circuit 29. Under the control of the control communication circuit 29, the starting battery charging circuit 26 may charge the starting battery 31 of the power battery 3 of the EV or HEV.

The detailed operation process will be described with reference to Fig. 5 hereinafter.

When the starting battery 31 and the traction battery 33 of the EV or HEV simultaneously feed power, the in-vehicle charger 2 according to the embodiments of the present invention inputs the commercial power, then the control communication circuit 29, the rectification and voltage-stabilizing circuit 22 may supply power to the traction battery charging circuit 27 and the starting battery charging circuit 26. Because the starting battery 31 is feeding and may not supply power to the battery manager 32, the starting battery charging circuit 26 may charge the starting battery 31 under the control of the control communication circuit 29. The starting battery charging circuit 26 may be supplied power by the rectification and voltage-stabilizing circuit 22, and the power may be isolated and converted into the suitable voltage to charge the starting battery 31. The starting battery charging circuit 26 may be the switching power supply circuit of the flyback topology type. When the charging voltage for the starting battery 31 reaches a threshold, the starting battery charging circuit 26 may feed the signal to the control communication circuit 29, then the control communication circuit 29 may communicate with the battery manager 32. When the charging of the traction battery 33 is confirmed to start after the communication between the control communication circuit 29 and the battery manager 32, the traction battery charging circuit 27 may continually charge the traction battery 33 under the control of the control communication circuit 29 until the charging of the traction battery 33 has finished or the charging has been stopped manually. Therefore, the electric energy of the starting battery 31 and the traction battery 33 may ensure the vehicle operation after charging for a period of time.

In addition, because the starting battery charging circuit 26 may continually charge the starting battery 31 in the charging process, as long as the power of the starting battery charging circuit 26 reaches the required value, it is not necessary to use the DC/DC converter to charge the starting battery. Therefore, the charging efficiency is improved as well as the number of the electrical apparatuses participating in the charging process is reduced.

The in-vehicle charger 2 further comprises a heat dissipation module 28. The heat dissipation module 28 is connected with the rectification and voltage-stabilizing circuit and may be supplied power by the rectification and voltage-stabilizing circuit. The heat dissipation module 28 is suitable for heat dissipation of whole in-vehicle charger 2 and may employ the air cooling or water cooling according to the actual condition.

According to the embodiments of the present invention, when the starting battery 31 and traction battery 33 of the EV or HEV simultaneously feed power, the user may not need other vehicles to assist in supplying electric energy, as long as a commercial power socket is available to realize charging the starting battery 31 and traction battery 33. Compared with an additional special starting battery charger needed in the prior art, the in-vehicle charger 2 according to the embodiments of the present invention has a high use value, and a good use effect.

## Claims

1. An in-vehicle charger (2), comprising:
a) a rectification and voltage-stabilizing circuit (22) which inputs, rectifies and stabilizes a commercial power;
b) a traction battery charging circuit (27) which is electrically connected with the rectification and voltage-stabilizing circuit (22) and charges a traction battery (33);
c) a control communication circuit (29) which is electrically connected with the rectification and voltage-stabilizing circuit (22) and controls the traction battery charging circuit (27); and
d) a starting battery charging circuit (26) which is electrically connected with the rectification and voltage-stabilizing circuit (22) and starts charging of a starting battery (31) under control of the control communication circuit (29);
e) wherein the charging of the traction battery (33) is confirmed to start after the communication after the charging voltage for the starting battery (31) reaches a threshold.

2. The in-vehicle charger (2) of claim1, wherein the starting battery charging circuit (26) is one of a flyback topolopy circuit, a forward circuit and a half-bridge topolopy circuit.

3. The in-vehicle charger (2) of claim 2, wherein the starting battery charging circuit (26) is a switching power supply circuit of flyback topology type.

4. The in-vehicle charger (2) of claim 3, wherein the traction battery charging circuit (27) comprises a boost circuit and a buck circuit.

5. The in-vehicle charger (2) of claim 4, wherein the rectification and voltage-stabilizing circuit (22) is a power factor correction circuit.

6. The in-vehicle charger (2) of any one of claims 1-5, further comprising a heat dissipation module (28) electrically connected with the rectification and voltage-stabilizing circuit (22).

## Patentansprüche

1. Fahrzeug-Bord-Lader (2), umfassend:
a) eine Gleichrichtungs- und Spannungsstabilisierungsschaltung (22), die einen Netzstrom annimmt, gleichrichtet und stabilisiert;
b) eine Traktionsbatterie-Ladeschaltung (27), die mit der Gleichrichtungs- und Spannungsstabilisierungsschaltung (22) verbunden ist und eine Traktionsbatterie (33) lädt;
c) eine Steuerungskommunikationsschaltung (29), die mit der Gleichrichtungs- und Spannungsstabilisierungsschaltung (22) elektrisch verbunden ist und die Traktionsbatterie-Ladeschaltung (27) steuert, und
d) eine Starterbatterie-Ladeschaltung (26), die mit der Gleichrichtungs- und Spannungsstabilisierungsschaltung (22) elektrisch verbunden ist und das Laden einer Starterbatterie (31) unter Steuerung der Steuerungskommunikationsschaltung (29) startet;
e) wobei bestätigt wird, dass das Laden der Traktionsbatterie (33) nach der Kommunikation startet, nachdem die Ladespannung für die Starterbatterie (31) einen Schwellenwert erreicht.

2. Fahrzeug-Bord-Lader (2) nach Anspruch 1, wobei die Starterbatterie-Ladeschaltung (26) eine Flyback-Topologie-Schaltung, eine Vorwärts-Schaltung oder eine Halbbrücken-Topologie-Schaltung ist.

3. Fahrzeug-Bord-Lader (2) nach Anspruch 2, wobei die Starterbatterie-Ladeschaltung (26) eine Schalt-Stromversorgungsschaltung vom Flyback-Topologie-Typ ist.

4. Fahrzeug-Bord-Lader (2) nach Anspruch 3, wobei die Traktionsbatterie-Ladeschaltung (27) eine Boost-Schaltung und eine Buck-Schaltung umfasst.

5. Fahrzeug-Bord-Lader (2) nach Anspruch 4, wobei die Gleichrichtungs- und Spannungsstabilisierungsschaltung (22) eine Leistungsfaktor-Korrekturschaltung ist.

6. Fahrzeug-Bord-Lader (2) nach einem der Ansprüche 1 bis 5, weiter umfassend ein Wärmeableitmodul (28), das mit der Gleichrichtungs- und Spannungsstabilisierungsschaltung (22) elektrisch verbunden ist.

## Revendications

1. Chargeur embarqué sur véhicule (2) comprenant :
a) un circuit de redressement et de stabilisation de tension (22) qui reçoit en entrée, redresse et stabilise une électricité commerciale ;
b) un circuit de chargement de batterie de traction (27) qui est connecté électriquement au circuit de redressement et de stabilisation de tension (22) et charge une batterie de traction (33) ;
c) un circuit de communication de commande (29) qui est connecté électriquement au circuit de redressement et de stabilisation de tension (22) et commande le circuit de chargement de batterie de traction (27) ; et
d) un circuit de chargement de batterie de démarrage (26) qui est connecté électriquement au circuit de redressement et de stabilisation de tension (22) et démarre le chargement d'une batterie de démarrage (31) sous le contrôle du circuit de communication de commande (29) ;
e) dans lequel la charge de la batterie de traction (33) est censée démarrer après communication que la tension de chargement de la batterie de démarrage (31) a atteint un seuil.

2. Chargeur embarqué sur véhicule (2) selon la revendication 1, dans lequel le circuit de chargement de batterie de démarrage (26) est l'un ou l'autre d'un circuit de topologie à récupération, d'un circuit direct et d'un circuit de topologie à demi-pont.

3. Chargeur embarqué sur véhicule (2) selon la revendication 2, dans lequel le circuit de chargement de batterie de démarrage (26) est un circuit d'alimentation commutant du type à topologie à récupération.

4. Chargeur embarqué sur véhicule (2) selon la revendication 3, dans lequel le circuit de chargement de batterie de traction (27) comprend un circuit survolteur et un circuit dévolteur .

5. Chargeur embarqué sur véhicule (2) selon la revendication 4, dans lequel le circuit de redressement et de stabilisation de tension (22) est un circuit de correction de facteur de puissance.

6. Chargeur embarqué sur véhicule (2) selon l'une quelconque des revendications 1 à 5, comprenant en outre un module de dissipation de chaleur (28) connecté électriquement au circuit de redressement et de stabilisation de tension (22).
